# EUROPÄISCHE PATENTANMELDUNG

(11) **EP 0 849 062 A1**
(43) Veröffentlichungstag der Anmeldung: **24.06.1998**
(21) Anmeldenummer: 97122256.7
(22) Anmeldetag: 17.12.1997
(51) Int. Cl.: B29C 45/72, B29C 35/16, F25D 25/04, F25D 31/00

(54) **Verfahren und Vorrichtung zum Entnehmen von Kunststofferzeugnissen aus einer Kunststoff-Spritzgiessmaschine**

(30) Priorität: 21.12.1996 DE 19653778
(71) Anmelder: HERBST, Richard, D-85386 Eching (DE)
(72) Erfinder: HERBST, Richard, D-85386 Eching (DE)
(74) Vertreter: Witte, Alexander, Dr.-Ing.

(57) **Zusammenfassung**

Ein Verfahren und eine Vorrichtung dienen zum Entnehmen von Kunststofferzeugnissen (18) aus einer Kunststoff-Spritzgießmaschine. Die Kunststofferzeugnisse (18) werden nach dem Entformen aus einem Werkzeug der Kunststoff-Spritzgießmaschine gekühlt. Die Kunststofferzeugnisse (18) werden dazu mit mindestens zwei Oberflächen (47, 48) an Kühl-Oberflächen (35, 36) einer Kühlvorrichtung (25) angelegt.

## Beschreibung

Die Erfindung betrifft eine Verfahren zum Entnehmen von Kunststofferzeugnissen aus einer Kunststoff-Spritzgießmaschine, bei dem die Kunststofferzeugnisse nach dem Entformen aus einem Werkzeug der Kunststoff-Spritzgießmaschine gekühlt werden.

Die Erfindung betrifft ferner eine Vorrichtung zum Entnehmen von Kunststofferzeugnissen aus einer Kunststoff-Spritzgießmaschine, mit einer Vorrichtung zum Kühlen der Kunststofferzeugnisse nach dem Entformen aus einem Werkzeug der Kunststoff-Spritzgießmaschine.

Ein Verfahren und eine Vorrichtung sind aus dem DE-U-94 02 931.8 bekannt.

Beim Spritzgießen von Kunststofferzeugnissen wird das Kunststoffgranulat plastifiziert und dabei auf eine Temperatur im Bereich zwischen 250 und 300°C erhitzt. Die Schmelze wird dann in den Formhohlraum eingespritzt.

Nach dem Einspritzen der Kunststoffschmelze in das Formnest oder die mehreren Formnester des Werkzeugs der Kunststoff-Spritzgießmaschine kühlt die Kunststoffschmelze mehr oder weniger schnell, typischerweise innerhalb von 1,5 bis 20 Sekunden, ab. Der Temperaturverlauf in dieser Abkühlungsphase ist von vielen Parametern abhängig, beispielsweise von Art, Größe und Konstruktion des Werkzeugs, vom Vorhandensein oder Nicht-Vorhandensein einer Kühlung im Werkzeug usw.

Wenn die Kunststoffschmelze im Werkzeug auf eine vorbestimmte Temperatur abgesunken ist, bei der das gespritzte Kunststofferzeugnis eine für das Entformen ausreichende Stabilität besitzt, ist der sogenannte Entformungszeitpunkt gekommen, zu dem der Entformungsvorgang beginnen kann.

Um eine möglichst hohe Auslastung der kapitalintensiven Kunststoff-Spritzgießmaschinen zu erreichen, ist man bemüht, die Taktzeit zwischen dem Einspritzzeitpunkt und dem Entformungszeitpunkt so klein wie möglich zu halten.

Es sind daher bereits verschiedene Verfahren und Vorrichtungen vorgeschlagen worden, die es gestatten, das Kunststofferzeugnis möglichst frühzeitig zu entformen und dann außerhalb des Werkzeugs weiter abzukühlen, damit das Werkzeug möglichst kurzfristig für einen neuen Spritzvorgang zur Verfügung steht.

Bei einer Vorrichtung, wie sie in der eingangs genannten DE-U-94 02 931 beschrieben ist, werden die Kunststofferzeugnisse mittels einer Greifeinrichtung aus dem Werkzeug entnommen, die eine kühlbare Greiferplatte umfaßt. Die Greiferplatte wird an das Kunststofferzeugnis formschlüssig angelegt und an dieses angepreßt. Die Greiferplatte ist zu diesem Zweck mit Kühlbohrungen für den Durchlaß eines Kühlmittels versehen.

Die bekannte Vorrichtung ist insbesondere für die Handhabung großflächiger und dünnwandiger Kunststofferzeugnisse geeignet, beispielsweise für Deckel und Böden von Hüllen für Compact Discs (CDs).

Bei der bekannten Vorrichtung ist von Nachteil, daß die Kühleinrichtung für die frisch entformten Kunststofferzeugnisse ausschließlich am Handlingsystem für die Entnahme der Kunststofferzeugnisse vorgesehen ist. Damit ist der Greifer des Handlingsystems für eine relativ lange Zeitdauer blockiert, nämlich für die Zeitdauer, die erforderlich ist, um die Kunststofferzeugnisse so weit abzukühlen, daß sie ohne die Gefahr mechanischer Deformationen von den gekühlten Greiferplatten abgenommen werden können.

Zwar ist zur teilweisen Lösung dieses Problems bei der bekannten Vorrichtung vorgesehen, das Handlingsystem mit einer Anzahl von kühlbaren Greiferplatten zu versehen, die doppelt so groß ist wie die Anzahl der Formnester im Werkzeug, damit bei einem ersten Zyklus die eine Hälfte der Greiferplatten wirksam wird und im darauffolgenden Zyklus die andere Hälfte, insgesamt also die doppelte Kühlzeit zur Verfügung steht, mit dieser Maßnahme ist aber eine wesentliche Verkomplizierung der Anordnung verbunden. Diese wiederum führt zu einem erhöhten Steueraufwand, erhöhten Kosten und auch zu Handlingproblemen, weil nunmehr ein wesentlich komplexeres Handlingsystem bei jedem Zyklus der Kunststoff-Spritzgießmaschine ein- und ausgefahren werden muß.

Darüber hinaus ist es mit der bekannten Vorrichtung auch nicht möglich, längere Kühlzeiten zu realisieren, ohne wiederum die Taktzeit der Kunststoff-Spritzgießmaschine zu verlängern.

Schließlich hat die bekannte Vorrichtung den Nachteil, daß die frisch entformten, flächigen Kunststofferzeugnisse nur einseitig an die kühlbaren Greiferplatten angelegt werden. Dies kann bei sehr dünnwandigen Kunststofferzeugnissen zu einer Verformung führen, wenn sich die an der Greiferplatte anliegende Oberfläche des Kunststofferzeugnisses schneller abkühlt und zusammenzieht als die davon abgewandte Oberfläche. Es entstehen dann gewölbte Kunststofferzeugnisse, die unter Umständen nicht mehr brauchbar sind.

Der Erfindung liegt daher die Aufgabe zugrunde, ein Verfahren und eine Vorrichtung der eingangs genannten Art dahingehend weiterzubilden, daß die vorstehend genannten Nachteile vermieden werden. Insbesondere soll es möglich sein, die Taktzeit der Kunststoff-Spritzgießmaschine weiter zu verkürzen, ohne Einbußen in der Qualität der Kunststofferzeugnisse in Kauf zu nehmen.

Bei dem Verfahren der eingangs genannten Art wird diese Aufgabe erfindungsgemäß dadurch gelöst, daß die Kunststofferzeugnisse mit mindestens zwei Oberflächen an Kühl-Oberflächen einer Kühlvorrichtung angelegt werden.

Bei der Vorrichtung der eingangs genannten Art wird die Aufgabe erfindungsgemäß dadurch gelöst, daß die Kühlvorrichtung mit zwei Kühl-Oberflächen versehen ist, die an zwei Oberflächen der Kunststofferzeugnisse anlegbar sind.

Die der Erfindung zugrunde liegende Aufgabe wird damit vollkommen gelöst.

Erfindungsgemäß werden nämlich die Kunststofferzeugnisse durch beidseitiges Kühlen abgekühlt, so daß das Kunststofferzeugnis von beiden Seiten gleichmäßig abkühlt und sich daher nicht verziehen kann. Bei etwas dickeren Kunststofferzeugnissen wird auf diese Weise der bekannte Effekt vermieden, daß ein aus dem Werkzeug bereits entformtes Kunststofferzeugnis in bestimmten Oberflächenbereichen wieder erweicht, weil die im Inneren des Kunststofferzeugnisses gespeicherte Wärme an eine frei liegende und damit nur unzureichend gekühlte Oberfläche fließt und diese wieder erweicht.

Wenn darüber hinaus ein flaches Kunststofferzeugnis zwischen zwei Kühl-Oberflächen abgekühlt wird, verringert sich auch die Gefahr, daß infolge einer zu starken Abkühlung eine Kondensatbildung eintritt. Generell gilt, daß eine Kondensatbildung an einer Oberfläche, z.B. eines flachen Kunststofferzeugnisses, auftreten kann, wenn die Temperatur der Oberfläche unterhalb des sogenannten Taupunktes liegt. Der Taupunkt liegt typischerweise bei 14°C. Man kann daher die Kondensatbildung einerseits dadurch verhindern, daß man die Temperatur der Oberfläche stets oberhalb des Taupunktes einstellt, andererseits ist es erfindungsgemäß aber auch möglich, die Kondensatbildung zumindest deutlich dadurch zu verringern, daß man das Kunststofferzeugnis möglichst allseitig einschließt, so daß keine frei liegenden Oberflächen vorhanden sind. Dies ist insbesondere dann der Fall, wenn das flache Kunststofferzeugnis, wie beschrieben, zwischen zwei Kühl-Oberflächen eingeschlossen wird. Dann sind allenfalls noch die sehr schmalen Seiten des Kunststofferzeugnisses frei.

Bei einer bevorzugten Ausgestaltung der Erfindung sind die Kunststofferzeugnisse im wesentlichen flach ausgebildet, und die Oberflächen sind als Ober- bzw. Unterseite der Kunststofferzeugnisse im wesentlichen parallel zueinander angeordnet.

Diese Maßnahme hat den Vorteil, daß großflächige und flache Kunststofferzeugnisse, beispielsweise die bereits erwähnten CD-Boxen, in vorteilhafter Weise mit niedrigen Taktzeiten der Kunststoff-Spritzgießmaschine hergestellt werden können.

Bei besonders bevorzugten Ausführungsbeispielen der Erfindung werden die Kunststofferzeugnisse schrittweise zwischen den Kühl-Oberflächen verschoben. Hierzu sind die Kühl-Oberflächen an Kühlplatten vorgesehen, wobei mindestens eine der Kühlplatten relativ zur anderen beweglich ausgebildet und mit Haltemitteln für die Kunststofferzeugnisse versehen ist.

Diese Maßnahmen haben den Vorteil, daß die Verweilzeit der Kunststofferzeugnisse zwischen den beiden Kühlplatten nahezu beliebig lang bemessen werden kann, so daß die Kunststofferzeugnisse so weit abgekühlt werden können, daß sie auch mit relativ einfachen und robusten Systemen weiterbehandelt, beispielsweise gestapelt, verpackt usw. werden können.

Bevorzugt ist dabei, wenn die Kunststofferzeugnisse entlang eines linearen Weges zwischen den Kühl-Oberflächen verschoben werden. Hierzu sind die Kühlplatten derart relativ zueinander beweglich, daß die Kunststofferzeugnisse mittels der an der einen Kühlplatte angeordneten Haltemittel von der anderen Kühlplatte abnehmbar und um einen vorgegebenen Schritt auf deren Kühl-Oberfläche versetzbar sind, wobei vorzugsweise die Kunststofferzeugnisse entlang eines linearen Weges schrittweise auf der Kühl-Oberfläche der anderen Kühlplatte versetzbar sind.

Diese Maßnahme hat den Vorteil, daß mit einem sehr einfachen Bewegungsablauf eine "Wanderung" der Kunststofferzeugnisse zwischen den Kühlplatten möglich ist. Es versteht sich jedoch, daß auch andere Wege möglich sind, beispielsweise mäanderförmige oder sonstige Wege zwischen den Kühlplatten.

In jedem Falle ist weiter bevorzugt, wenn die Kunststofferzeugnisse an einem vorderen Ende einer Kühl-Oberfläche in die Kühlvorrichtung aufgegeben und an einem hinteren Ende einer Kühl-Oberfläche von der Kühlvorrichtung abgegeben werden. Hierzu ist an einem vorderen Ende einer Kühlplatte eine Umsetzstation und an einem hinteren Ende einer Kühlplatte eine Stapelstation angeordnet.

Diese Maßnahme hat den Vorteil, daß die erfindungsgemäße Kühlvorrichtung problemlos in eine Fließfertigung eingebaut werden kann, bei der die noch relativ warmen und weichen Kunststofferzeugnisse am einen Ende aufgegeben und als abgekühlte und stabile Kunststofferzeugnisse am hinteren Ende abgenommen und dann weiterbehandelt werden können.

Eine gute Wirkung wird ferner dadurch erzielt, daß die Kunststofferzeugnisse an mindestens einer Oberfläche konturiert sind und daß die zugehörige Kühl-Oberfläche komplementär konturiert ist.

Diese Maßnahme hat den Vorteil, daß auch Kunststofferzeugnisse mit relativ unregelmäßigen Oberflächen zuverlässig gekühlt werden können. In gewissem Umfange ist auch eine Nachbehandlung im Sinne einer Formgebung während des Abkühlens auf diese Weise möglich.

Bei Ausführungsbeispielen der Erfindung werden die Kühl-Oberflächen unter Druck an die Oberflächen der Kunststofferzeugnisse angelegt. Hierzu ist mindestens eine der Kühlplatten mit einer Bewegungseinrichtung verbunden, die ein Andrücken der Kühlplatten aneinander ermöglicht.

Dies gilt insbesondere dann, wenn der Druck in einer vorbestimmten flächenhaften Verteilung auf die Oberfläche ausgeübt wird. Dabei kann in vorteilhafter Weise durch das Ausüben des Drucks auf die Oberflächen ein Prägevorgang ausgeführt werden.

Schließlich kann man eine besonders gute Wirkung dadurch erzielen, daß die Kühl-Oberflächen eine vorbestimmte flächenhafte Verteilung einer thermischen Behandlung auf die Oberflächen bewirken.

Diese Maßnahmen haben den Vorteil, daß die Kühlwirkung wesentlich verbessert werden kann, weil der Wärmeübergang zwischen den Kunststofferzeugnissen und den Kühlplatten wesentlich verbessert wird. Darüber hinaus ist aber auch, wie bereits erwähnt, eine gewisse Nachbehandlung der Kunststofferzeugnisse möglich, beispielsweise in dem Sinne, daß trotz des mit dem Abkühlen einhergehenden Schrumpfens der Kunststofferzeugnisse deren äußere Form erhalten wird. So kann beispielsweise der Schrumpfvorgang durch die Einstellung eines Temperaturprofils über die Kühl-Oberfläche beeinflußt werden. Wenn man z.B. eine Platte erst am Umfang und dann innen abkühlt, wird die Platte von selbst geradegezogen. Darüber hinaus ist es mit den genannten Maßnahmen auch möglich, ein bereits verformtes Teil wieder in eine gewünschte Form zu bringen, indem das noch weiche Teil durch entsprechende Profilierung des Drucks und/oder der Temperatur verformt wird. Wenn insoweit von "thermischer Behandlung" die Rede ist, so schließt dies auch die Möglichkeit ein, bestimmte Oberflächenbereiche kurzzeitig in ihrer Temperatur wieder anzuheben, auch wenn generell eine Abkühlung beabsichtigt ist. Wenn die Kühl-Oberflächen unter Druck an die Oberflächen der Kunststofferzeugnisse angelegt werden, kann in vorteilhafter Weise gleichzeitig ein Fremdteil in die noch weiche Masse des Kunststofferzeugnisses eingedrückt werden. Unter "Fremdteil" ist dabei z.B. ein elektronischer Chip zu verstehen oder aber auch ein mechanisches Teil, beispielsweise eine Gewindebuchse, ein Scharnier oder dergleichen.

Bei einer besonders bevorzugten Variante dieses Ausführungsbeispiels werden erste Kunststofferzeugnisse mittels einer der Kühl-Oberflächen aufgenommen und auf zweite Kunststofferzeugnisse aufgesetzt und mit diesen gefügt. Hierzu sind die Kühlplatten derart zueinander bewegbar, daß zwei Kunststofferzeugnisse übereinander angeordnet sind.

Diese Maßnahme hat den Vorteil, daß innerhalb der Kühlvorrichtung eine weitere Funktion, nämlich ein Fügen mehrerer Kunststoffteile, ausgeführt werden kann. Es liegt auf der Hand, daß dadurch eine Verkürzung des gesamten Herstellungsprozesses möglich ist.

Bei weiteren bevorzugten Ausführungsbeispielen der Erfindung umfassen die Haltemittel eine Unterdruckeinrichtung. Diese umfaßt vorzugsweise eine Düse zum Ausstoßen eines auf eine Oberfläche der Kunststofferzeugnisse gerichteten Luftstroms, derart, daß die Kunststofferzeugnisse mittels eines durch Venturi-Effekt erzeugten Unterdrucks gehalten werden.

Diese an sich von Handhabungsvorrichtungen für Bleche bekannte Maßnahme hat den Vorteil, daß mit äußerst einfachen Mitteln ein zuverlässiges Halten und damit Verfahren der Kunststofferzeugnisse möglich ist.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine äußerst schematisierte Draufsicht auf eine Kunststoff-Spritzgießmaschine, wie sie im Rahmen der vorliegenden Erfindung Verwendung findet;
- Fig. 2 bis 8: schematisierte Bewegungsskizzen für zwei Kühlplatten in der in Fig. 1 dargestellten Kunststoff-Spritzgießmaschine;
- Fig. 9: in stark vergrößertem Maßstab, in Seitenansicht und teilweise geschnitten, einen Ausschnitt aus zwei Kühlplatten, wie sie in den Figuren 2 bis 8 dargestellt sind;
- Fig. 10 und 11: eine weitere Draufsicht auf zwei Kühlplatten in zwei unterschiedlichen Arbeitsstellungen, gemaß einem weiteren Ausführungsbeispiel der Erfindung.

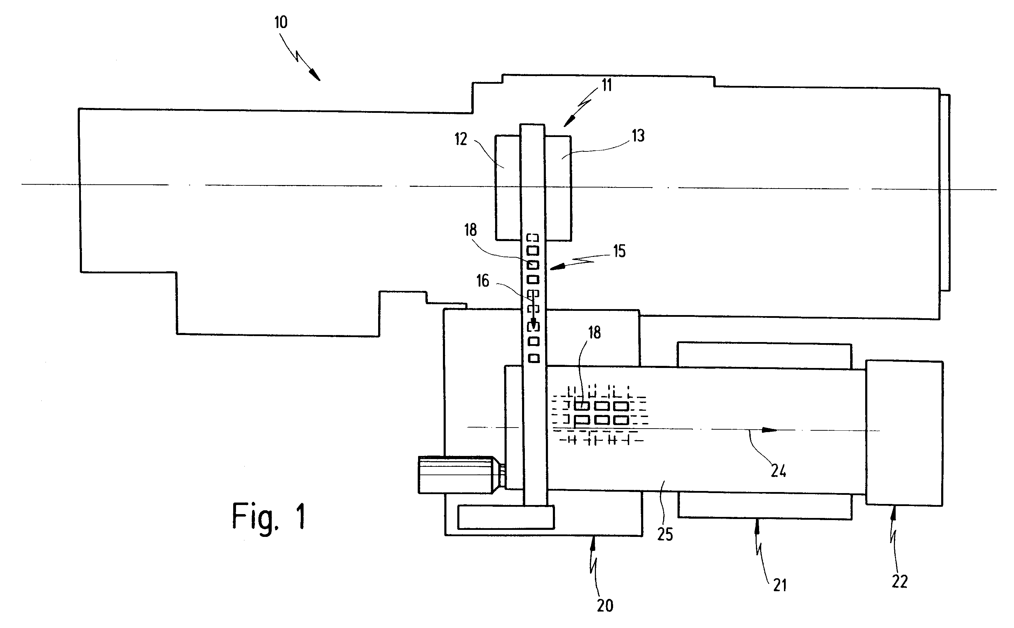

In Fig. 1 bezeichnet 10 insgesamt eine Kunststoff-Spritzgießmaschine von an sich herkömmlicher Bauart. Die Maschine 10 umfaßt ein nur äußerst schematisch dargestelltes Werkzeug 11 mit zwei Werkzeughälften 12, 13.

Um aus dem Werkzeug 11 im geöffneten Zustand die gespritzten Kunststofferzeugnisse entnehmen zu können, ist ein insgesamt mit 15 bezeichnetes Handlingsystem vorgesehen. Das Handlingsystem 15 entnimmt die aus dem Werkzeug 11 entformten Kunststofferzeugnisse und befördert diese in Richtung eines Pfeils 16 aus der Kunststoff-Spritzgießmaschine 10 heraus. Die Kunststofferzeugnisse sind dabei mit 18 bezeichnet.

Neben der Kunststoff-Spritzgießmaschine 10 befinden sich nebeneinander eine Umsetzstation 20, eine Kühlstation 21 sowie eine Stapelstation 22, die von den Kunststofferzeugnissen 18 nacheinander durchlaufen werden, wie noch erläutert werden wird. Die Umsetzstation ist dabei nur beispielhaft zu verstehen; sie kann gegebenenfalls auch entfallen.

Die Umsetzstation 20 entnimmt die noch warmen und instabilen Kunststofferzeugnisse 18 von dem Handlingsystem 15 und setzt diese auf eine Kühlvorrichtung 25 der Kühlstation 21 auf. Nach dem Durchlaufen der Kühlstation 21 (Pfeil 24) gelangen die abgekühlten Kunststofferzeugnisse 18 zur Stapelstation 22 und werden dort gestapelt und gegebenenfalls verpackt.

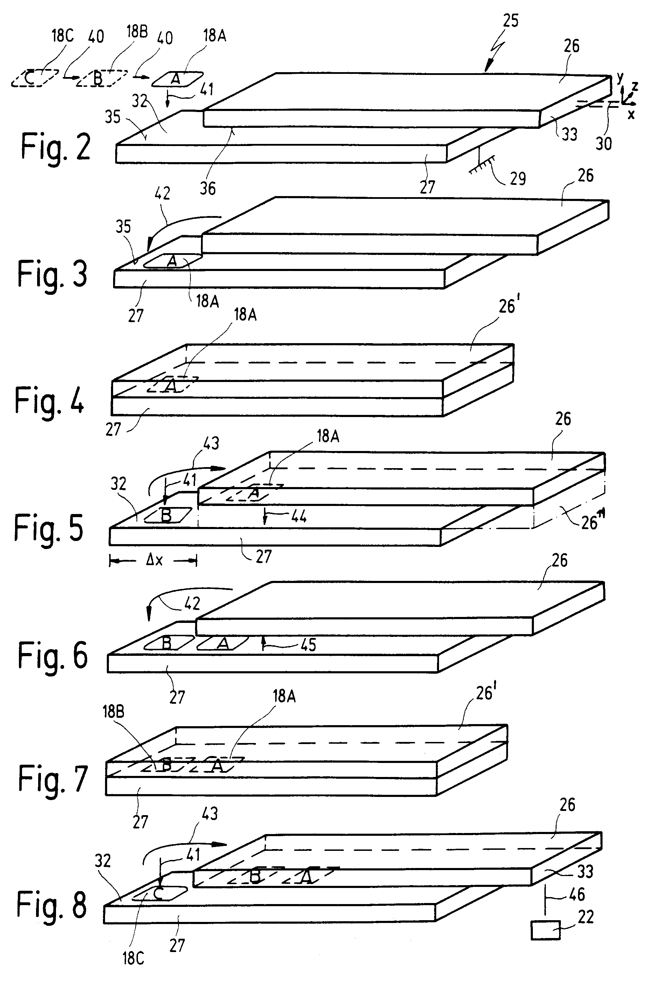

Die Funktionsweise der Kühlvorrichtung 25 soll nun anhand der Figuren 2 bis 8 näher erläutert werden:

Man erkennt in Fig. 2, daß die Kühlvorrichtung 25 eine obere Kühlplatte 26 sowie eine untere Kühlplatte 27 umfaßt. Während die untere Kühlplatte 27 mit einer raumfesten Basis 29 verbunden, ihrerseits also unbeweglich ist, steht die obere Kühlplatte 26 mit einer Bewegungseinrichtung 30 in Verbindung. Die Bewegungseinrichtung 30 gestattet ein Verfahren der oberen Kühlplatte 26 relativ zur unteren Kühlplatte 27 beispielsweise entlang kartesischer Koordinaten x, y und z. Somit sind also beliebige Bewegungen der oberen Kühlplatte 26 relativ zur unteren Kühlplatte 27 möglich. Hierzu kann alternativ die obere Kühlplatte raumfest und die untere beweglich sein, wie auch beide Kühlplatten beweglich sein können.

Es versteht sich jedoch, daß auch andere Bewegungsvorrichtungen eingesetzt werden können, um eine relative Beweglichkeit zwischen den Kühlplatten 26 und 27 zu ermöglichen.

Die Kunststofferzeugnisse 18A, 18B, 18C werden von der Umsetzstation 20 einem vorderen Ende 32 der unteren Kühlplatte 27 zugeführt. Dies geschieht vorzugsweise in Gestalt einer Reihe in Richtung des Pfeils 24 in Fig. 1. Dabei sind weiter vorzugsweise mehrere derartige Reihen nebeneinander angeordnet, wie dies in Fig. 1 schematisch angedeutet ist.

Nach dem Durchlaufen der Kühlstation 21 verlassen die Kunststofferzeugnisse 18A, 18B, 18C ... den Bereich der Kühlplatten 26, 27 an einem hinteren Ende 33 der oberen Kühlplatte 26, wie noch erläutert werden wird.

Die untere Kühlplatte 27 ist mit einer oberen Kühl-Oberfläche 35 versehen, während die obere Kühlplatte 26 eine untere Kühl-Oberfläche 36 aufweist. Die Kühl-Oberflächen 35, 36 sind daher gegeneinander gerichtet. Sie verlaufen im wesentlichen parallel. Die Kühl-Oberflächen 35, 36 können durch geeignete Mittel (nicht dargestellt) so ausgebildet werden, daß über die jeweilige Oberfläche ein vorbestimmtes Druckprofil und/oder ein vorbestimmtes Temperaturprofil eingestellt werden kann. Hierzu können bestimmte Oberflächenabschnitte elastisch mit innenliegenden Betätigungseinrichtungen ausgebildet sein. Zur Erzeugung bestimmter Temperaturprofile entlang der Oberfläche können die Kühlkanäle entsprechend flächenhaft verteilt sein. In bestimmten Fällen kann es auch notwendig sein, auf der Oberfläche an bestimmten Punkten sogar eine Wieder-Erwärmung durch kurzzeitiges Anheben der Temperatur (Heizkanäle) zu bewirken.

Wie in Fig. 2 dargestellt, werden die Kunststofferzeugnisse 18A, 18B, 18C den Kühlplatten 26, 27 in Richtung von Pfeilen 40 zugeführt, die mit dem Pfeil 24 in Fig. 1 gleichgerichtet sind. Das vorderste Kunststofferzeugnis 18A befindet sich nun oberhalb des vorderen Endes 32 der unteren Kühlplatte und wird dort nach unten (Pfeil 41) auf diese abgesenkt. Während dieser Phase des Bewegungsablaufs befindet sich die obere Kühlplatte 26 in der in Fig. 2 gezeigten Stellung, in der sie in Richtung der Pfeile 40 um einen bestimmten Schritt relativ zur unteren Kühlplatte 27 zurückgezogen und nach oben von ihr beabstandet ist.

Sobald nun das erste Kunststofferzeugnis 18A auf der Kühl-Oberfläche 35 der unteren Kühlplatte 27 aufliegt (Fig. 3), wird die obere Kühlplatte 36 entgegen der Richtung der Pfeile 40 nach links verschoben und nach unten abgesenkt (Pfeil 42).

Wie Fig. 4 zeigt, liegt die obere Kühlplatte 26 in einer Stellung 26' nun oben auf der unteren Kühlplatte 27 auf, so daß das erste Kunststofferzeugnis 18A zwischen beiden Kühlplatten 26', 27 eingeschlossen ist. Da das Kunststofferzeugnis 18A in dieser Stellung gemäß Fig. 4 mit beiden großen Oberflächen an den entsprechenden Kühl-Oberflächen 35, 36 der Kühlplatten 26, 27 anliegt, wird es intensiv abgekühlt und zugleich gegen ein Verformen, z.B. durch Wölben, gesichert. Mit denselben Mitteln kann aber auch eine bereits vorhandene Verformung wieder korrigiert werden, indem das verformte Kunststofferzeugnis, das sich in diesem Augenblick noch in einem verformbaren Zustand befindet, wieder in eine vorbestimmte Form gebracht wird.

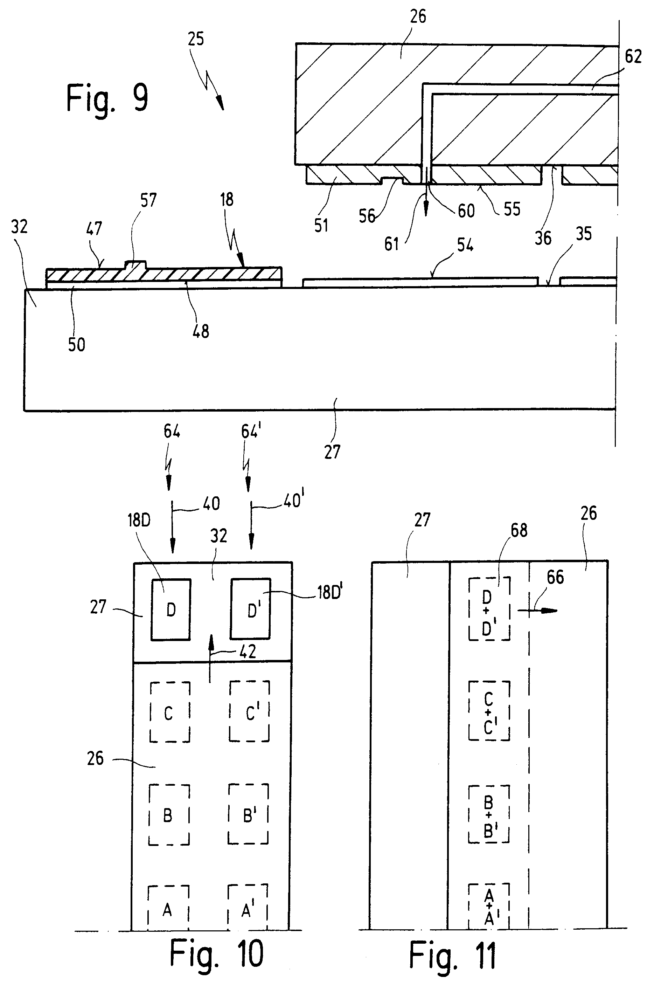

In der oberen Kühlplatte 26' wird nun eine in Fig. 4 und 5 nicht dargestellte Haltevorrichtung für das erste Kunststofferzeugnis 18A aktiviert (Einzelheiten dazu werden in Fig. 9 beschrieben). Die obere Kühlplatte 26 wird nun wieder nach oben abgehoben und in Richtung der Pfeile 40 um einen Schritt Δx verschoben (Pfeil 43), um dann nach unten abgesenkt zu werden (Pfeil 44). Die obere Kühlplatte 26 befindet sich nun in einer dritten Betriebsstellung 26''. Das erste Kunststofferzeugnis 18A wird in dieser dritten Betriebsstellung wiederum zwischen den beiden Kühlplatten 26'', 27 flächig gehalten und gekühlt. Das vordere Ende 32 der unteren Kühlplatte 27 liegt nun wieder frei, so daß ein zweites Kunststofferzeugnis 18B von oben (Pfeil 41) aufgesetzt werden kannn. Als nächstes wird die in der oberen Kühlplatte 26 vorgesehene Haltevorrichtung für das erste Kunststofferzeugnis 18A wieder deaktiviert. Die obere Kühlplatte 26 wird, wie Fig. 6 zeigt, nach oben verfahren (Pfeil 45) und dann wieder entgegen der Richtung der Pfeile 40 nach vorne verschoben und auf die untere Kühlplatte 27 abgesenkt (Pfeil 42).

Wie Fig. 7 zeigt, befindet sich die obere Kühlplatte 26 nun wieder in ihrer Stellung 26' (vgl. Fig. 4), in der sie mit der unteren Kühlplatte 27 fluchtet. Zwischen den Kühlplatten 26'', 27 sind nun beide Kunststofferzeugnisse 18A, 18B eingeschlossen.

Für den nächsten Schritt werden nun in der oberen Kühlplatte 26 vorgesehene Haltevorrichtungen für beide Kunststofferzeugnisse 18A, 18B aktiviert und die obere Kühlplatte 26 wieder nach oben abgehoben und nach hinten verfahren (Pfeil 43), wie Fig. 8 zeigt. Es kann nun ein drittes Kunststofferzeugnis 18C auf das vordere Ende 32 der unteren Kühlplatte 27 aufgesetzt werden (Pfeil 41).

Die zuvor geschilderten Schritte wiederholen sich nun zyklisch. Wie man leicht erkennt, wandern die Kunststofferzeugnisse 18A, 18B, 18C ... in Richtung der Pfeile 40 (x-Richtung) zwischen den beiden Kühlplatten 26, 27 in den Figuren von links nach rechts, bis sie schließlich nacheinander das hintere Ende 33 der oberen Kühlplatte 26 erreichen. Sie werden dort abgenommen (Pfeil 46) und der Stapelstation 22 zugeführt.

Beim Durchführen der in Fig. 2 bis 8 geschilderten Schritte wird man selbstverständlich bestrebt sein, die dargestellten Offenzeiten zwischen den Kühlplatten 26, 27 so kurz wie möglich zu halten und die Kunststofferzeugnisse 18 so lange wie möglich zwischen aufeinander aufliegenden Kühlplatten 26, 27 einzuschließen.

Der dargestellte Bewegungsablauf führt zu einem linearen Weg der Kunststofferzeugnisse 18A, 18B, 18C ... zwischen den Kühlplatten 26, 27. Durch Variation des Bewegungsablaufes kann auch ein anderer Weg dargestellt werden, beispielsweise ein mäanderförmiger oder sonstwie geformter Weg. Wenn statt der vorstehend beschriebenen, linear verfahrbaren Kühlplatten 26, 27 z.B. ein Drehtisch oder zwei gegenläufig zueinander laufende Drehtische verwendet werden, kann der genannte Weg selbstverständlich auch kreisförmig, spiralig oder dergleichen ausgelegt werden.

In Fig. 9 sind weitere Einzelheiten der Anordnung gemäß Fig. 2 bis 8 dargestellt.

Man erkennt, daß das Kunststofferzeugnis 18 eine obere Oberfläche 47 sowie eine untere Oberfläche 48 aufweist. Zur Aufnahme der Kunststofferzeugnisse 18 auf der unteren Kühlplatte 27 dienen untere Auflagen 50, während die obere Kühlplatte 26 mit entsprechenden oberen Auflagen 51 versehen ist.

Die unteren Auflagen 50 haben eine ebene Oberfläche 54, weil die untere Oberfläche 48 der Kunststofferzeugnisse 18 ebenfalls eben ist.

Hingegen ist die Oberfläche 55 der oberen Auflagen 51 konturiert, nämlich mit einer Ausnehmung 56 versehen, die einem Vorsprung 57 auf der oberen Oberfläche 47 der Kunststofferzeugnisse 18 entspricht.

Um die Kunststofferzeugnisse 19 mittels der oberen Kühlplatte 26 von der unteren Kühlplatte 27 abheben zu können, ist eine Unterdruckvorrichtung vorgesehen. Diese umfaßt im wesentlichen eine Düse 60, die mitten in der Oberfläche 55 der oberen Auflage 51 ausmündet. Aus der Düse 60 tritt ein Luftstrom 61 aus, weil die Düse 60 über einen Kanal 62 mit einer entsprechenden Druckluftversorgung verbunden ist (nicht dargestellt). Durch den dabei auftretenden Venturi-Effekt bildet sich ein Unterdruck zwischen der Oberfläche 55 und dem Kunststofferzeugnis 19 aus, mit dem das Kunststofferzeugnis 19 gehalten werden kann.

Wenn die obere Kühlplatte 26 in Fig. 9 nach links verfahren und nach unten abgesenkt wird, so daß das Kunststofferzeugnis 18 von der oberen Auflage 51 ergriffen wird, wird der Luftstrom 61 eingeschaltet. Auf diese Weise wird das Kunststofferzeugnis 18 an die obere Auflage 51 angesaugt und kann von dieser nach oben mitgenommen werden.

In den Figuren 10 und 11 ist noch eine weitere Variante der Erfindung dargestellt.

Man erkennt, daß die Kunststofferzeugnisse 18 in Richtung von Pfeilen 40, 40' entlang von zwei parallelen Reihen 64, 64' auf das vordere Ende 32 der unteren Kühlplatte 27 aufgegeben werden.

In Fig. 10 ist die linke Reihe mit A, B, C, D und die rechte Reihe mit A', B', C' und D' bezeichnet. Die Erzeugnisse in den Reihen 64 und 64' sind zueinander passend, derart, daß sie nachfolgend miteinander gefügt werden können und sollen. Die Teile können beispielsweise das Unterteil und das Oberteil einer CD-Box sein.

Es sei nun angenommen, daß auf das vordere Ende 32 die Teile 18D, 18D' aufgebracht wurden. Die obere Kühlplatte 26 fährt nun mit insgesamt nicht-aktivierten Haltevorrichtungen nach vorne (Pfeil 42) und senkt sich auf sämtliche Teile ab, die sich an der in Fig. 10 eingezeichneten Position befinden.

Es werden nun nur die Haltevorrichtungen der Teile der linken Reihe A, B, C, D aktiviert und die obere Kühlplatte 26 alsdann nach rechts verfahren (Pfeil 66 in Fig. 11), bis sich die einander zugehörigen Teile A/A', B/B', C/C', D/D' übereinander befinden. Die obere Kühlplatte 26 wird nun nach unten abgesenkt. Es wird dabei ein gewisser Druck ausgeübt, so daß die einander zugehörigen Teile miteinander gefügt werden. Es entstehen dann fertige Produkte 68, die aus jeweils zwei Teilen bestehen.

## Patentansprüche

1. Verfahren zum Entnehmen von Kunststofferzeugnissen (18) aus einer Kunststoff-Spritzgießmaschine (10), bei dem die Kunststofferzeugnisse (18) nach dem Entformen aus einem Werkzeug (11) der Kunststoff-Spritzgießmaschine (10) gekühlt werden, dadurch gekennzeichnet, daß die Kunststofferzeugnisse (18) mit mindestens zwei Oberflächen (47, 48) an Kühl-Oberflächen (35, 36) einer Kühlvorrichtung (25) angelegt werden.

2. Verfahren nach Anspruch 1, dadurch gekennzeichnet, daß die Kunststofferzeugnisse (18) im wesentlichen flach ausgebildet und die Oberflächen (47, 48) als Ober- bzw. Unterseite der Kunststofferzeugnisse (18) im wesentlichen parallel zueinander angeordnet sind.

3. Verfahren nach Anspruch 1 oder 2, dadurch gekennzeichnet, daß die Kunststofferzeugnisse (18) schrittweise zwischen den Kühl-Oberflächen (35, 36) verschoben werden.

4. Verfahren nach Anspruch 3, dadurch gekennzeichnet, daß die Kunststofferzeugnisse (18) entlang eines linearen Weges zwischen den Kühl-Oberflächen (35, 36) verschoben werden.

5. Verfahren nach Anspruch 3 oder 4, dadurch gekennzeichnet, daß die Kunststofferzeugnisse (18) an einem vorderen Ende (32) einer Kühl-Oberfläche (35) in die Kühlvorrichtung (25) aufgegeben und an einem hinteren Ende (33) einer Kühl-Oberfläche (36) von der Kühlvorrichtung (25) abgegeben werden.

6. Verfahren nach einem oder mehreren der Ansprüche 1 bis 5, dadurch gekennzeichnet, daß die Kunststofferzeugnisse (18) an mindestens einer Oberfläche (47) konturiert sind und daß die zugehörige Kühl-Oberfläche (36) komplementär konturiert ist.

7. Verfahren nach einem oder mehreren der Ansprüche 1 bis 6, dadurch gekennzeichnet, daß die Kühl-Oberflächen (35, 36) unter Druck an die Oberflächen (47, 48) der Kuststofferzeugnisse (18) angelegt werden.

8. Verfahren nach Anspruch 7, dadurch gekennzeichnet, daß beim Anlegen ein Fremdteil in das Kunststofferzeugnis (18) eingedrückt wird.

9. Verfahren nach Anspruch 7 oder 8, dadurch gekennzeichnet, daß der Druck in einer vorbestimmten flächenhaften Verteilung auf die Oberflächen (47, 48) ausgeübt wird.

10. Verfahren nach einem oder mehreren der Ansprüche 7 bis 9, dadurch gekennzeichnet, daß durch das Ausüben des Drucks auf die Oberflächen (47, 48) ein Prägevorgang ausgeführt wird.

11. Verfahren nach einem oder mehreren der Ansprüche 1 bis 10, dadurch gekennzeichnet, daß die Kühl-Oberflächen (35, 36) eine vorbestimmte flächenhafte Verteilung einer thermischen Behandlung auf die Oberflächen (47, 48) bewirken.

12. Verfahren nach einem oder mehreren der Ansprüche 1 bis 11, dadurch gekennzeichnet, daß erste Kunststofferzeugnisse (18D) mittels einer der Kühl-Oberflächen aufgenommen und auf zweite Kunststofferzeugnisse (18D') aufgesetzt und mit diesen gefügt werden.

13. Vorrichtung zum Entnehmen von Kunststofferzeugnissen (18) aus einer Kunststoff-Spritzgießmaschine (10), mit einer Vorrichtung (25) zum Kühlen der Kunststofferzeugnisse (18) nach dem Entformen aus einem Werkzeug (11) der Kunststoff-Spritzgießmaschine (10), dadurch gekennzeichnet, daß die Kühlvorrichtung (25) mit zwei Kühl-Oberflächen (35, 36) versehen ist, die an zwei Oberflächen (47, 48) der Kunststofferzeugnisse (18) anlegbar sind.

14. Vorrichtung nach Anspruch 13, dadurch gekennzeichnet, daß die Kühl-Oberflächen (35, 36) im wesentlichen parallel angeordnet sind.

15. Vorrichtung nach Anspruch 12 oder 13, dadurch gekennzeichnet, daß die Kühl-Oberflächen (35, 36) an Kühlplatten (26, 27) vorgesehen sind, und daß mindestens eine der Kühlplatten (26) relativ zur anderen (27) beweglich ausgebildet und mit Haltemitteln (51, 60) für die Kunststofferzeugnisse (18) versehen ist.

16. Vorrichtung nach Anspruch 15, dadurch gekennzeichnet, daß die Kühlplatten (26, 27) derart relativ zueinander beweglich sind, daß die Kunststofferzeugnisse (18) mittels der an der einen Kühlplatte (26) angeordneten Haltemittel (51, 60) von der anderen Kühlplatte (27) abnehmbar und um einen vorgegebenen Schritt auf deren Kühl-Oberfläche (35) versetzbar sind.

17. Vorrichtung nach Anspruch 16, dadurch gekennzeichnet, daß die Kunststofferzeugnisse (18) entlang eines linearen Weges schrittweise auf der Kühl-Oberfläche (35) der anderen Kühlplatte (27) versetzbar sind.

18. Vorrichtung nach Anspruch 16 oder 17, dadurch gekennzeichnet, daß an einem vorderen Ende (32) einer Kühlplatte (27) eine Umsetzstation (20) und an einem hinteren Ende (33) einer Kühlplatte (26) eine Stapelstation (22) angeordnet sind.

19. Vorrichtung nach einem oder mehreren der Ansprüche 13 bis 18, dadurch gekennzeichnet, daß mindestens eine der Kühl-Oberflächen (36) komplementär zur zugehörigen Oberfläche (47) der Kunststofferzeugnisse (18) konturiert ist.

20. Vorrichtung nach einem oder mehreren der Ansprüche 15 bis 19, dadurch gekennzeichnet, daß mindestens eine der Kühlplatten (26) mit einer Bewegungseinrichtung (20) verbunden ist, und daß die Bewegungseinrichtung (20) ein Andrücken der Kühlplatten (26, 27) aneinander ermöglicht.

21. Vorrichtung nach Anspruch 20, dadurch gekennzeichnet, daß die Kühlplatten (26, 27) derart zueinander bewegbar sind, daß zwei Kunststofferzeugnisse (18D, 18D') übereinander angeordnet sind.

22. Vorrichtung nach einem oder mehreren der Ansprüche 15 bis 21, dadurch gekennzeichnet, daß die Haltemittel (51, 60) eine Unterdruckeinrichtung umfassen.

23. Vorrichtung nach Anspruch 22, dadurch gekennzeichnet, daß die Unterdruckeinrichtung eine Düse (60) zum Ausstoßen eines auf eine Oberfläche (47) der Kunststofferzeugnisse (18) gerichteten Luftstroms (61) umfaßt, derart, daß die Kunststofferzeugnisse (18) mittels eines durch Venturi-Effekt erzeugten Unterdrucks gehalten werden.
